# EUROPÄISCHE PATENTSCHRIFT

(11) **EP 3 244 192 B1**
(45) Veröffentlichungstag und Bekanntmachung des Hinweises auf die Patenterteilung: **02.10.2019**
(21) Anmeldenummer: 16169033.4
(22) Anmeldetag: 10.05.2016
(51) Int. Cl.: G01N 17/00

(54) **VERFAHREN ZUR STEUERUNG EINER PRÜFKAMMER**
METHOD FOR CONTROLLING A TEST CHAMBER
PROCEDE DE COMMANDE D'UNE CHAMBRE DE TEST

(43) Veröffentlichungstag der Anmeldung: 15.11.2017
(73) Patentinhaber: Weiss Umwelttechnik GmbH, 35447 Reiskirchen (DE)
(72) Erfinder: SCHLOSSER, Volker, 35305 Grünberg (DE)
(74) Vertreter: advotec.

(56) Entgegenhaltungen:
- EP-A1- 2 759 826
- DE-A1-102011 075 490
- US-A1- 2012 072 171

## Beschreibung

Die Erfindung betrifft ein Verfahren zur Steuerung einer Prüfkammer, insbesondere einer Klimakammer, wobei in einem Prüfraum der Prüfkammer Prüfgut angeordnet und in einem Prüfzeitabschnitt im Prüfraum zumindest einer physikalischen Prüfbedingung ausgesetzt wird, wobei die Einstellung der Prüfbedingung mittels einer Steuervorrichtung gesteuert wird, wobei in dem Prüfzeitabschnitt mittels zumindest einer Kamera Bilddatensätze des Prüfguts erfasst werden, wobei die Bilderdatensätze mittels einer Auswertevorrichtung verarbeitet werden, wobei mittels der Auswertevorrichtung eine Veränderung der Bilddatensätze in dem Prüfzeitabschnitt bestimmbar ist.

Bei der Temperatur- und Klimaprüfung von Prüfgut werden regelmäßig Prüfkammern mit verschließbaren Prüfräumen eingesetzt, in denen zumindest eine Temperatur und auch andere Umgebungsparameter einstellbar sind, um bestimmte klimatische und andere Umgebungsbedingungen simulieren zu können. Das Prüfgut wird dabei innerhalb eines Prüfablaufs beziehungsweise eines Prüfzeitabschnitts der simulierten Umgebungsbedingung ausgesetzt. Beispielsweise kann ein Prüfablauf auch mehrere Prüfzeitabschnitte mit sukzessiven Temperaturwechseln umfassen. Da sich derartige Prüfabläufe regelmäßig auch über einen Zeitraum von Stunden oder Tagen erstrecken können, sind eventuelle Veränderungen des Prüfguts, die durch die Prüfbedingung bedingt sein können nur im Nachhinein festzustellen, da keine permanente Überwachung des Prüfguts durch eine Person praktikabel erfolgen kann.

Mit Wärmebildkameras ist es möglich eine thermografische Aufnahme des Prüfguts zu erstellen und auszuwerten, jedoch kann mit der thermografischen Aufnahme lediglich ein Temperaturgradient am Prüfgut dargestellt und gegebenenfalls anhand einer Intensität bzw. Farbgebung der Aufnahme ein Temperaturwert an einem Punkt des Prüfgutes abgeschätzt werden. Eine genauere Temperaturmessung am Prüfgut ist sonst nur umständlich oder mit einem Temperatursensor ungenau möglich, insbesondere wenn es sich bei dem Prüfgut um eine Platine mit diskreten Bauteilen handelt, die in ihren Abmessungen kleiner als der Temperatursensor sein können. Eine unverfälschte Temperaturmessung eines derartigen Bauteils ist dann kaum möglich. Hinzu kommt, dass Prüfkammern regelmäßig stark reflektierende Wände und Einbauten aufweisen, die eine genaue thermografische Aufnahme, unter anderem auch aufgrund von geringen Abständen innerhalb eines Prüfraums der Prüfkammer, erschweren. Wände des Prüfraums sowie Einbauten erzeugen Spiegelungen auf das Prüfgut, die eine korrekte Wärmebildmessung verhindern. Daher ist es bekannt, Innenwände von Prüfräumen mit speziellen Lacken zu beschichten, die einen Emissionsgrad von nahezu 1 aufweisen. Dennoch kann dann immer noch auf Prüfgut mit einem vergleichsweise geringen Emissionsgrad eine, eine Messung verfälschende Spiegelung erzeugt werden. Darüber hinaus erzeugt eine im Prüfraum eingebaute Wärmebildkamera auf Prüfgut ein Abbild ihrer selbst. Die Wärmebildkamera muss, um ihre korrekte Funktion zu gewährleisten, auf eine Temperatur um Raumtemperatur, idealerweise bei 25°C bzw. in einem Bereich von 10°C bis 40°C, temperiert werden. Werden dann beispielsweise thermografische Aufnahmen bei tiefen Temperaturen im Prüfraum mit einer entsprechend temperierten Wärmebildkamera bzw. einer entsprechenden Temperatur eines Schutzgehäuses der Wärmebildkamera aufgenommen, bildet sich die Wärmestrahlung des Schutzgehäuses auf einer Oberfläche des Prüfguts ab und verfälscht so eine Messung. Dieser Effekt tritt verstärkt in der Klimaprüftechnik auf, da mögliche Abstände zwischen einer Wärmebildkamera und einem Prüfgut aus Platzgründen im Prüfraum meist sehr gering sind.

Gerade bei Prüfgut mit unterschiedlichen Oberflächen, wie bei einer bestückten Platine, weist das Prüfgut bzw. der Prüfling durch eine Vielzahl von Bauteilen Oberflächen mit sich sehr stark unterscheidenden Emissionsgraden auf, weshalb sich eine Messung verschiedener Oberflächenbereiche derartigen Prüfguts sehr aufwendig gestaltet. Es ist daher für eine Messung bei verschiedenen Temperaturen stets erforderlich die Wärmebildkamera zu kalibrieren. Insbesondere eine Messung von Prüfgut, welches Temperaturwechseln in einem Bereich zwischen -70°C und Raumtemperatur ausgesetzt sein soll, ist daher nur mit großem Aufwand bei gleichzeitig nicht befriedigend genauen Messergebnissen durchzuführen.

Die EP 2 759 826 A1 schlägt vor mittels einer Kamera das Prüfgut während des Prüfablaufs aufzunehmen, um nachträglich anhand gespeicherter Bilddatensätze der Kamera die Veränderung des Prüfguts beobachten zu können. Weiter ist vorgesehen, die Bilddatensätze der Kamera mit Zeitwerten eines Prüfzeitabschnitts des Prüfablaufs sowie erfassten Messwerten zu korrelieren. Die Messwerte können beispielsweise von einem Temperatur- oder Feuchtigkeitssensor in dem Prüfraum gewonnen werden. Damit ist es möglich den Zeitpunkt der Veränderung des Prüfguts sowie die zu dem Zeitpunkt herrschenden Umgebungsbedingungen in dem Prüfraum zu ermitteln. Darüber hinaus kann eine Auswertevorrichtung vorgesehen sein, die die Veränderung des Prüfguts mittels der Bildverarbeitung dokumentieren kann. Zwar führt das bekannte Verfahren dazu, dass mehr Informationen über das Prüfgut beziehungsweise dessen Verhalten während des Prüfablaufs erhalten und dokumentiert werden können, jedoch muss der Prüfablauf immer im Rahmen einer vorausgesetzten, vorgesehenen Zeitdauer durchgeführt werden.

Auch ist es möglich, dass eine Prüfung von Prüfgut in einer unvorhergesehenen Weise verläuft, beispielsweise wenn Prüfgut durch die Umgebungsbedingungen zerstört wird oder sich ein unerwünschter Feuchtigkeitsniederschlag auf dem Prüfgut ausbildet. Der Prüfablauf muss dann erneut mit entsprechend angepassten Umgebungsbedingungen durchgeführt werden. Da die Nutzungszeiten von Prüfkammern kostenaufwendig sind, erhöhen sich die Kosten noch weiter mit sich wiederholenden Prüfabläufen.

Aus der EP 2 759 826 A1 ist ein Verfahren zur Steuerung einer Prüferkammer bekannt, bei dem mittels einer Kamera Prüfgut während eines Prüfablaufs aufgenommen wird. Bilddaten der Kamera werden gespeichert und mit Zeitwerten korreliert, um nachträglich anhand der gespeicherten Bilddaten eine Veränderung des Prüfguts beobachten zu können. Weiter können Messwerte von einem Temperatur- oder Feuchtigkeitssensor in dem Prüferraum gewonnen werden. Damit wird es möglich einen Zeitpunkt einer Veränderung des Prüfguts sowie die zu dem Zeitpunkt herrschenden Umgebungsbedingungen in dem Prüferraum zu ermitteln. Darüber hinaus kann eine Auswertevorrichtung vorgesehen sein, die die Veränderung des Prüfguts mittels Bildverarbeitung dokumentieren kann.

Die DE 10 2011 075 490 A1 betrifft ebenfalls ein Verfahren zur Steuerung einer Prüfkammer insbesondere einer Korrosionsprüfanlage. Ein Prüfling kann hier einer physikalischen Prüfbedingung, wie Salznebel oder einem Luftstrom ausgesetzt werden, wobei mittels einer Videokamera ein Prüfablauf dokumentiert werden kann. Der Prüfablauf wird nach einer Anzahl von festgelegten Prüfzyklen oder bei erkennbar auftretenden Schäden beendet.

Die US 2012/072171 A1 beschreibt eine Dokumentation einer Änderung von Dimensionen eines Produkts vor, während und nach einer klimatischen Veränderung mittels einer Anzahl Kameras.

Es ist daher Aufgabe der Erfindung, ein Verfahren zur Steuerung einer Prüfkammer vorzuschlagen, das die Kosten zur Durchführung eines Prüfablaufs vermindert.

Diese Aufgabe wird durch ein Verfahren mit den Merkmalen des Anspruchs 1 gelöst.

Bei dem erfindungsgemäßen Verfahren zur Steuerung einer Prüfkammer, insbesondere einer Klimakammer, wird in einem Prüfraum der Prüfkammer Prüfgut angeordnet und in einem Prüfzeitabschnitt im Prüfraum zumindest einer physikalischen Prüfbedingung ausgesetzt, wobei eine Einstellung der Prüfbedingung mittels einer Steuervorrichtung gesteuert wird, wobei in dem Prüfzeitabschnitt mittels zumindest einer Kamera Bilddatensätze des Prüfguts erfasst werden, wobei die Bilddatensätze mittels einer Auswertevorrichtung verarbeitet werden, wobei mittels der Auswertevorrichtung eine Veränderung der Bilddatensätze in dem Prüfzeitabschnitt bestimmt wird, wobei bei einer Veränderung der Bilddatensätze die Auswertevorrichtung der Steuervorrichtung eine Zustandsänderung des Prüfguts signalisiert, wobei die Steuervorrichtung in dem Prüfzeitabschnitt die Prüfbedingung in Abhängigkeit der Zustandsänderung anpasst.

Dadurch, dass die Auswertevorrichtung die Veränderung der Bilddatensätze nicht nur erkennt, und damit die Zustandsänderung des Prüfguts, sondern auch an die Steuervorrichtung, die die Prüfbedingung steuert, übermittelt bzw. signalisiert, wird es möglich, innerhalb des Prüfzeitabschnittes eines Prüfablaufs mittels der Steuervorrichtung die Prüfbedingung in Abhängigkeit der Zustandsänderung des Prüfguts bzw. der Veränderung der Bilddatensätze zu regeln bzw. anzupassen. Der Prüfzeitabschnitt kann dabei dem gesamten Prüfablauf entsprechen oder der Prüfablauf kann eine Vielzahl von Prüfzeitabschnitten, beispielsweise wenn es sich um stetig wiederholende Prüfungen handelt, aufweisen. Unter der Anpassung der Prüfbedingungen kann jede Art der Regelung bzw. Einstellung von Prüfbedingungen mittels der Steuervorrichtung verstanden werden. Wenn beispielsweise eine unerwünschte Veränderung von Prüfgut von der Auswertevorrichtung festgestellt wird, kann die physikalische Prüfbedingung so weit verändert werden, dass sich die unerwünschte Veränderung des Prüfguts sich nicht fortsetzt bzw. revidiert wird. Damit ist es dann gegebenenfalls nicht mehr erforderlich, den Prüfablauf erneut durchzuführen. Die Kamera ist damit, insbesondere zusammen mit der Auswertevorrichtung, ein optischer Sensor, der die Zustandsänderung des Prüfguts detektiert und diese an die Steuervorrichtung weitergibt. Die Steuervorrichtung passt in Abhängigkeit der Zustandsänderung die Prüfbedingungen an, weshalb durch die Signalisierung der Zustandsänderung an die Steuervorrichtung ein Regelkreis mit der Zustandsänderung als Regelgröße ausgebildet ist. Insgesamt wird dadurch eine verbesserte Regelung eines Prüfablaufs möglich, wodurch sonst gegebenenfalls erforderliche Wiederholungen von Prüfabläufen vermieden werden bzw. Kosten eingespart werden können.

Die physikalische Prüfbedingung kann eine Temperatur, eine relative Luftfeuchte, eine Korrosionsatmosphäre und/oder eine Bauteilfestigkeit sein. Die Korrosionsatmosphäre in dem Prüfraum kann beispielsweise durch Versprühen eines Salznebels hergestellt werden. Die Bauteilfestigkeit kann durch Aufbringen einer Kraft auf das Prüfgut oder durch ein in Schwingung versetzen des Prüfguts geprüft werden. Dies kann beispielsweise mittels eines Rütteltisches innerhalb des Prüfraums erfolgen. Weiter kann eine Temperatur in dem Prüfraum in einem Temperaturbereich von -75°C bis +180°C, vorzugsweise -100°C bis +200°C, ausgebildet werden. Auch eine relative Luftfeuchte kann in einem Feuchtigkeitsbereich von 0 bis 100 % liegen.

Eine mit der Kamera optisch erfassbare Veränderung kann an dem Prüfgut in dem Prüfzeitabschnitt mittels der Auswertevorrichtung als Zustandsänderung bestimmt werden. Dies kann durch Bildverarbeitung erfolgen, wobei ein erster Bilddatensatz mit einem zweiten bzw. n-ten Bilddatensatz verglichen werden kann. Der erste Bilddatensatz kann ein innerhalb des Prüfzeitabschnittes zeitlich vorangegangener Bilddatensatz oder ein bereits in der Auswertevorrichtung gespeicherter Bilddatensatz sein. So können auch Bilddatensätze von Referenzobjekten herangezogen werden, um die optisch erfassbare Veränderung zu detektieren. Die Auswertevorrichtung kann daher auch Mittel zur Datenverarbeitung, insbesondere zur Verarbeitung von Bilddatensätzen aufweisen. Hinsichtlich der optischen Erfassbarkeit der Veränderung an dem Prüfgut kann es bereits ausreichend sein, wenn die Kamera das Prüfgut nur abschnittsweise erfasst.

An dem Prüfgut können Referenzpunkte definiert werden, wobei eine örtliche Veränderung der Referenzpunkte in dem Prüfzeitabschnitt mittels der Auswertevorrichtung bestimmt werden können. Dadurch wird es dann möglich, gezielt eine Verformung des Prüfguts in dem Prüfzeitabschnitt zu bestimmen. Beispielsweise können sich Körper aus Polyurethanschaum durch Temperatureinwirkung verformen, was dann leicht feststellbar wäre. Auf dem Prüfgut können die Referenzpunkte als eine aufgebrachte Markierung ausgebildet sein, die mit der Kamera optisch erfassbar sind. Alternativ kann auch in einem Bilddatensatz eine Position bzw. Koordinate, die durch einen Pixel repräsentiert wird, als Referenzpunkt auf dem Prüfgut definiert werden. Eine Verformung des Prüfguts führt dann zwar nicht zur physikalischen Verschiebung des Pixels, jedoch zu einer Verlagerung von Intensitäts- und Farbwerten des Pixels zu einem benachbarten Pixel, was als Verschiebung des Referenzpunktes detektiert werden kann.

Weiter kann in dem Prüfgut eine Rissbildung und/oder eine plötzliche Veränderung des Prüfguts in dem Prüfzeitabschnitt mittels der Auswertevorrichtung bestimmt werden. So kann bei einer Prüfung der Bauteilfestigkeit an dem Prüfgut über einen längeren Zeitabschnitt ein Riss entstehen oder das Prüfgut auch gänzlich auseinanderbrechen, was ebenfalls leicht mittels Bildverarbeitung zu detektiert werden kann. Dies ist besonders vorteilhaft, da gerade auch eine Bauteilfestigkeit von klimatischen Umgebungsbedingungen abhängig ist.

Weiter kann an dem Prüfgut eine physikalische Veränderung eines Stoffs, beispielsweise Wasser, durch Sublimation, Resublimation, Kondensation, Verdampfung, Erstarren oder Schmelzen in dem Prüfzeitabschnitt mittels der Auswertevorrichtung bestimmt werden. Gegebenenfalls ist es unerwünscht, dass sich Wasser oder Eis an dem Prüfgut niederschlägt oder es soll festgestellt werden, an welcher Stelle des Prüfguts der Niederschlag erfolgt. Umgekehrt kann es von Interesse sein, ob und wie ein Niederschlag vom Prüfgut entfernt wird, beispielsweise wann eine beheizbare Scheibe abgetaut ist.

Darüber hinaus kann an dem Prüfgut eine Korrosion einer Oberfläche des Prüfguts in dem Prüfzeitabschnitt mittels der Auswertevorrichtung bestimmt werden. Eine chemische Veränderung kann beispielsweise eine Korrosion des Prüfguts oder eine sonstige chemische Veränderung einer Oberfläche es Prüfguts sein. Wenn das Prüfgut einer Korrosionsatmosphäre ausgesetzt ist, kann sich nach einiger Zeit eine Korrosion der Oberfläche des Prüfguts einstellen, die dann ebenfalls detektierbar wäre.

Es kann auch ein Funktionstest des Prüfguts in dem Prüfzeitabschnitt durchgeführt werden. Beispielsweise kann eine mögliche mechanische Bewegung mit dem Prüfgut wiederholt durchgeführt werden, so lange, bis sich beispielsweise ein Verschleiß oder ein Versagen von Bauteilen des Prüfguts ergibt. Das Prüfgut kann aber auch ein elektronisches Bauteil oder Gerät sein, dessen optisch wahrnehmbare Funktion überprüfbar ist. Beispielsweise kann ein Ausfall eines Monitors als ein Prüfgut leicht detektiert werden. In allen Fällen wäre es nicht erforderlich, spezielle Sensoren zur Erkennung der entsprechenden Veränderung am Prüfgut anzubringen. Ein Prüfablauf wird dadurch einfacher durchführbar und genauer messbar.

Mittels der Auswertevorrichtung können die Bilddatensätze mit Zeitwerten des Prüfzeitabschnitts und/oder Messwerten zumindest eines Sensors im Prüfraum korreliert werden, wobei die Bilddatensätze in einer Speichereinrichtung gespeichert werden können. Durch Korrelation der Bilddatensätze mit Zeitwerten wird es möglich, den Zeitpunkt einer Veränderung des Prüfguts genau nachzuvollziehen. Alternativ oder auch ergänzend können mit dem Sensor, der beispielsweise ein Temperatursensor oder ein Feuchtigkeitssensor sein kann, die Umgebungsbedingungen in dem Prüfraum zum Zeitpunkt der Veränderung vergleichsweise genau bestimmt werden. Dies kann zeitsynchron zum Prüfablauf oder nach Durchführung des Prüfablaufs erfolgen, wenn die Bilddatensätze in der Speichereinrichtung, zusammen mit den Zeitwerten und/oder Messwerten gespeichert werden. Als eine Speichereinrichtung können allgemein bekannte Medien eingesetzt werden, die vorzugsweise eine dauerhafte Aufbewahrung der Daten ermöglichen. Demnach kann der gesamte Prüfzeitabschnitt mit sämtlichen durch die Kamera und Sensoren gewonnenen Daten aufgezeichnet werden.

Die Kamera kann eine Wärmebildkamera sein, wobei das Prüfgut mittels der Wärmebildkamera thermografisch aufgenommen werden kann. So wird es dann auch möglich, eine Veränderung einer Temperatur einer Oberfläche des Prüfguts zu bestimmen.

In dem Prüfzeitabschnitt können mittels der Wärmebildkamera aus Pixeln gebildete thermografische Aufnahmen des Prüfguts, die durch die Bilddatensätze repräsentiert werden, erfasst werden, wobei den Bilddatensätzen bzw. einer Abfolge von Bilddatensätzen jeweils Zeitwerte innerhalb des Prüfzeitabschnitts zugeordnet werden können, wobei je Zeitwert zumindest einem Pixel eines Bilddatensatzes ein Temperaturwert innerhalb des Prüfzeitabschnitts zugeordnet werden kann, derart, dass mittels der Wärmebildkamera eine Temperaturmessung eines von dem Pixel repräsentierten Oberflächenpunktes des Prüfguts erfolgen kann. Unter der Temperierung des Prüfguts in dem Prüfzeitabschnitt bzw. im Rahmen eines Prüfablaufs mit einem oder mehreren Prüfzeitabschnitten kann in dem Prüfraum eine Temperatur in einem Temperaturbereich von - 75°C bis + 180°C, vorzugsweise - 100°C bis + 200°C, innerhalb des Prüfraums ausgebildet werden. Dabei kann auch das Prüfgut entsprechend erwärmt und mittels der Wärmebildkamera zumindest abschnittsweise aufgenommen werden. Die thermografische Aufnahme des Prüfguts liefert dann einen Bilddatensatz je Aufnahme. Die thermografische Aufnahme kann aus Pixeln, entsprechend einer Bildauflösung der Wärmebildkamera, ausgebildet werden, wobei die Pixel durch Datenfelder in dem Bilddatensatz repräsentiert werden können. Die Bilddatensätze können in einer Abfolge an die Auswertevorrichtung übermittelt werden, die den Bilddatensätzen entsprechend der Abfolge jeweils Zeitwerte relativ bezogen auf den Prüfzeitabschnitt zuordnet. Demnach können die Bilddatensätze mit Zeitwerten korreliert werden, sodass jeder Bilddatensatz einem Zeitpunkt des Prüfzeitabschnitts zugeordnet werden kann. So kann beispielsweise ein Temperaturverlauf an dem Prüfgut innerhalb des Prüfzeitabschnitts aufgezeichnet werden. Dieser Temperaturverlauf kann dadurch erhalten werden, dass für zumindest einen Pixel eines einzelnen Bilddatensatzes innerhalb des Prüfzeitabschnitts ein Temperaturwert verlässlich bekannt ist. Dies kann beispielsweise schon dadurch vorliegen, dass die Wärmebildkamera kalibriert wurde. Der Temperaturwert bzw. Temperaturverlauf des einen Pixels kann im Verhältnis auf andere Pixel übertragen werden, sodass sich für diese ebenfalls verhältnismäßig genaue Temperaturwerte ergeben. Die Zuordnung und Berechnung der Temperaturwerte für die Pixel kann mittels der Auswertevorrichtung durchgeführt werden. Insgesamt kann so mit der Wärmebildkamera eine vergleichsweise genaue Temperaturmessung eines Oberflächenpunktes des Prüfguts, der von einem Pixel mit dem bekannten Temperaturwert repräsentiert wird, durchgeführt werden. Dann ist es auch nicht mehr erforderlich direkt am Prüfgut Sensoren zur Temperaturmessung anzubringen. Eine Temperaturmessung von Prüfgut wird wesentlich vereinfacht und die Gefahr einer Beeinflussung der Temperaturmessung durch den Sensor am Prüfgut selbst, besteht nicht mehr.

Die Kamera kann innerhalb des Prüfraums in einem Schutzgehäuse oder außerhalb des Prüfraums verwendet werden. Dadurch, dass ein Schutzgehäuse für die Kamera innerhalb des Prüfraums verwendet wird, kann die Kamera auch Umgebungsbedingungen bzw. Prüfbedingungen ausgesetzt werden, die sonst eine Funktion der Kamera beeinträchtigen würden.

Vorteilhaft ist es, wenn die Auswertevorrichtung Bilddatensätze mehrerer Kameras gleichzeitig verarbeiten kann. Demnach kann das Verfahren auch mit mehreren, beispielsweise sechs Kameras durchgeführt werden. Das Prüfgut kann dann im Wesentlichen allseitig mit den Kameras erfasst werden.

In einer Ausführungsform des Verfahrens kann nach Erreichen einer definierten Zustandsänderung von der Steuervorrichtung der Prüfzeitabschnitt beendet werden. Eine definierte Zustandsänderung kann beispielsweise ein Bauteilversagen des Prüfguts sein. Auch kann die Zustandsänderung ein vollständiges Abtauen von Feuchtigkeit von dem Prüfgut sein. Wesentlich ist, dass mit dem Erreichen der Zustandsänderung der Prüfzeitabschnitt von der Steuervorrichtung beendet und nicht unnötigerweise fortgeführt wird. So kann gegebenenfalls der Prüfzeitabschnitt und damit der Prüfablauf insgesamt verkürzt werden.

Die Steuervorrichtung kann nach dem Prüfzeitabschnitt einen Prüfablauf abbrechen, den Prüfablauf mit einem weiteren Prüfzeitabschnitt fortsetzen oder ein Signal erzeugen. Der Prüfablauf kann beispielsweise dann abgebrochen werden, wenn zu einem Bauteilversagen des Prüfguts kommt. Von der Steuervorrichtung kann ein weiterer Prüfzeitabschnitt initiiert werden, wenn ein vorangegangener Prüfzeitabschnitt durchlaufen wurde. Dies kann beispielsweise der Fall sein, wenn eine definierte Zustandsänderung am Ende des vorangegangenen Prüfzeitabschnitts erreicht wurde. Auch kann vorgesehen sein, dass ein Warn-, Kontroll- oder Meldesignal von der Steuervorrichtung erzeugt wird, welche beispielsweise eine Bedienperson alarmiert oder eine automatische Notabschaltung der Prüfkammer initiiert. Ein beispielsweises Ausbrechen eines Feuers in dem Prüfraum könnte durch ein Meldesignal einen Alarm auslösen und gleichzeitig eine Feuerlöscheinrichtung in Gang setzen.

Die Steuervorrichtung kann der Auswertevorrichtung eine Änderung der Prüfbedingungen, vorzugsweise eine mit einem Sensor messbare physikalische Zustandsänderung des Prüfguts, des Prüfraums und/oder eine Änderung des Prüfablaufs signalisieren, wobei die Auswertevorrichtung die Verarbeitung der Bilddatensätze und/oder die Signalisierung der Zustandsänderung an die Steuervorrichtung ändern kann. Beispielsweise eine von der Steuervorrichtung im Rahmen eines definierten Prüfablaufs initiierte Temperaturerhöhung im Prüfraum kann dann von der Steuervorrichtung auch an die Auswertevorrichtung als ein Datensatz übermittelt werden. Die Auswertevorrichtung kann dann diese Temperaturerhöhung bei der Feststellung der Zustandsänderung berücksichtigen. Kommt es beispielsweise zu einer Vereisung des Prüfguts bei einer an die Auswertevorrichtung gemeldeten Temperaturerhöhung liegt eine Fehlfunktion der Steuervorrichtung vor. Gleichzeitig kann mit einem Temperatursensor die Temperatur im Prüfraum gemessen werden. Auch wenn ein Prüfzeitabschnitt beendet wurde, kann von der Steuervorrichtung der Beginn eines neuen Prüfzeitabschnitts an die Auswertevorrichtung übermittelt werden, die dann gegebenenfalls eine andere Art der Bildverarbeitung zur Detektion einer Zustandsänderung anwenden kann. Gegebenenfalls ist es in einem ersten Prüfzeitabschnitt erforderlich, eine Vereisung des Prüfguts, und in einem darauf folgenden Prüfzeitabschnitt eine Rissbildung am Prüfgut als eine Zustandsänderung des Prüfguts festzustellen.

Erfindungsgemäß wird eine Kamera zur Durchführung des erfindungsgemäßen Verfahrens zur Steuerung einer Prüfkammer, insbesondere einer Klimakammer, verwendet. Weitere vorteilhafte Ausführungsformen der Verwendung ergeben sich aus den auf den Verfahrensanspruch 1 rückbezogenen Unteransprüchen.

Nachfolgend wird die Erfindung unter Bezugnahme auf die beigefügten Zeichnungen näher erläutert.

Es zeigen:
- **Fig. 1**: eine schematische Darstellung einer Prüfraums;
- **Fig. 2**: eine schematische Darstellung einer Prüfkammer;
- **Fig. 3**: eine schematische Darstellung eines Prüfablaufs.

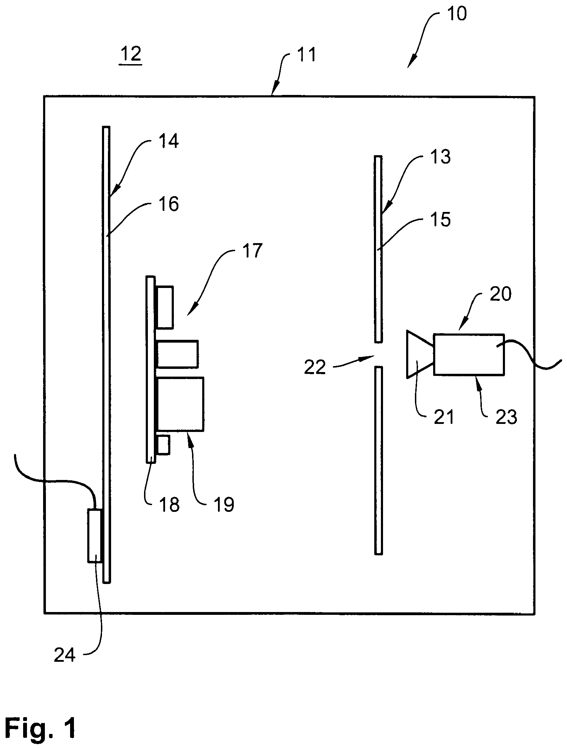

Die **Fig. 1** zeigt einen Prüfraum 10, der temperierbar ist und durch temperaturisolierte Wände 11 gegenüber einer Umgebung 12 abgeschlossen ist. Innerhalb des Prüfraums 10 ist eine Emissionsabschirmung 13 und ein Emissionshintergrund 14 von den Wänden 11 beabstandet angeordnet. Die Emissionsabschirmung 13 und der Emissionshintergrund 14 sind jeweils aus aus Metall bestehenden Blechen 15 bzw. 16 gebildet, die mit einem hier nicht dargestellten Lack beschichtet sind. Der jeweilige Emissionsgrad der Bleche 15 und 16 liegt in einem Bereich von 0,9 bis nahe 1. Die Bleche 15 und 16 sind relativ zueinander parallel angeordnet, wobei zwischen den Blechen 15 und 16 in relativer Nähe zum Emissionshintergrund 14 Prüfgut 17 im Prüfraum 10 angeordnet ist. Das Prüfgut 17 umfasst eine Platine 18 mit verschiedenen Bauteilen 19. Weiter ist im Prüfraum 10 eine Wärmebildkamera 20 mit einem Objektiv 21 angeordnet. In dem Blech 15 bzw. der Emissionsabschirmung 13 ist eine Blendenöffnung 22 ausgebildet, so dass durch die Blendenöffnung 22 mittels der Wärmebildkamera 20 eine thermografische Aufnahme des Prüfguts 17 erfolgen kann. Innerhalb der thermografischen Aufnahme sind dann das Prüfgut 17 und der Emissionshintergrund 14 sichtbar bzw. erfassbar. Eine mögliche Reflektion eines Gehäuses 23 der Wärmebildkamera 20 auf das Prüfgut 17 wird durch die Emissionsabschirmung 13 verhindert. Weiter ist an dem Emissionshintergrund 14 bzw. dem Blech 16 rückseitig ein Temperatursensor 24 angebracht, bei dem eine Temperatur des Blechs 16 fortlaufend erfasst werden kann. Mittels einer hier nicht dargestellten Auswertevorrichtung kann aufgrund des bekannten Emissionsgrades des Emissionshintergrundes 14 und der mit dem Temperatursensor 24 gemessenen Temperatur in einer thermografischen Aufnahme bzw. einer Wärmebildaufnahme der Wärmebildkamera 20 eine Referenz bzw. eine Referenzfläche innerhalb der Wärmebildaufnahme bzw. eines entsprechenden Bilddatensatzes geschaffen werden, über die eine Temperatur oder ein Emissionsgrad des Prüfguts 17 vergleichsweise genau bei jeder beliebigen Prüftemperatur bestimmt werden kann. Dabei werden die Bildbereiche der Wärmebildaufnahme des Emissionshintergrundes 14 mit den Bildbereichen bzw. Pixeln oder Gruppen von Pixeln des Prüfguts 17 bildverarbeitungstechnisch verglichen. Insgesamt wird es so möglich, mit der Wärmebildkamera 20 für jeden Punkt bzw. jedes Pixel eines mit der Wärmebildkamera 20 aufgenommenen Bilddatensatzes eine genaue Temperaturmessung durchzuführen. Insbesondere kann eine Temperaturmessung für Oberflächenpunkte des Prüfguts 17 durchgeführt werden, ohne dass ein Temperatursensor an dem Prüfgut 17 angebracht werden müsste.

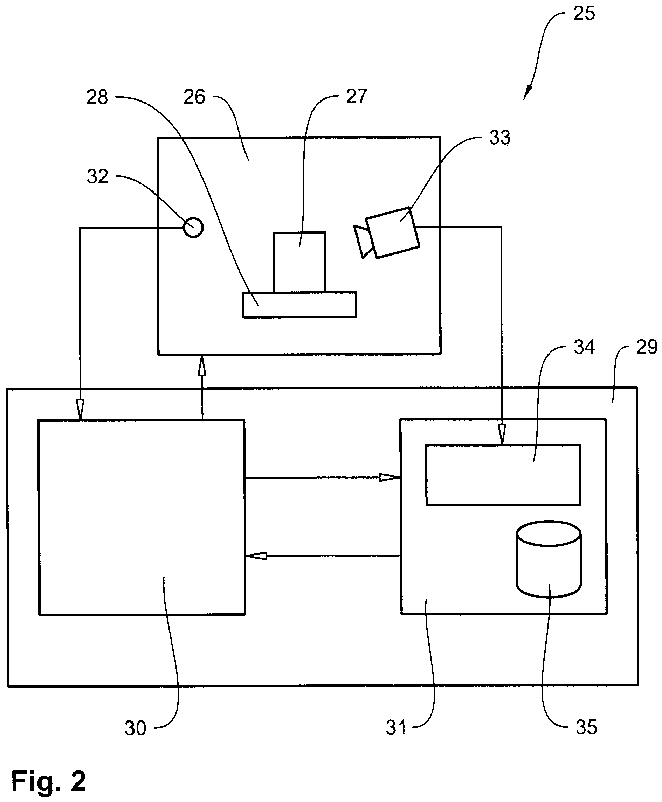

Die **Fig. 2** zeigt eine schematische Darstellung einer Prüfkammer 25 ohne dass die erforderlichen Mittel zur Herstellung einer Prüfbedingung bzw. Temperierung und Klimatisierung der Prüfkammer 25 dargestellt sind. Innerhalb eines Prüfraums 26 ist Prüfgut 27 auf einem Rütteltisch 28 angeordnet. Das Prüfgut 27 wird mittels des Rütteltisches 28 bewegt, wobei gleichzeitig der Prüfraum 26 klimatisiert wird. Die Prüfkammer 25 umfasst eine Anlagensteuerung 29 mit einer Steuervorrichtung 30 und einer Auswertevorrichtung 31. An die Steuervorrichtung 30 ist ein Temperatursensor 32 innerhalb des Prüfraums 26 angeschlossen, der kontinuierlich Temperaturmesswerte an die Steuervorrichtung 30 übermittelt. Die Steuervorrichtung 30 regelt aufgrund der vom Temperatursensor 32 erhaltenen Temperaturmesswerte eine Temperatur in dem Prüfraum 26 gemäß einer Vorgabe eines vorausbestimmten Prüfablaufs.

In dem Prüfraum 26 ist weiter eine Wärmebildkamera 33 in einem hier nicht näher dargestellten Schutzgehäuse angeordnet. Mittels der Wärmebildkamera 33 wird das Prüfgut 27 zumindest teilweise thermografisch aufgenommen, wobei die Wärmebildkamera 33 entsprechende Bilddatensätze an die Auswertevorrichtung 31 übermittelt. Die Auswertevorrichtung 31 weist ihrerseits eine Bildverarbeitungseinrichtung 34 und eine Speichereinrichtung 35 auf. Die Bildverarbeitungseinrichtung 34 verarbeitet die Bilddatensätze, wobei die Bilddatensätze in der Speichereinrichtung 35 gespeichert werden. Weiter weist die Auswertevorrichtung 31 den Bilddatensätzen, die in einer stetigen Abfolge aufgenommen werden, jeweils Zeitwerte innerhalb eines Prüfzeitabschnitts eines Prüfablaufs zu. Die Steuervorrichtung 30 übermittelt der Auswertevorrichtung 31 mit den Zeitwerten synchronisierte Temperaturwerte, die auch in der Speichereinrichtung 35 gespeichert werden. Es kann daher während oder nach dem Prüfablauf der Prüfablauf mit allen relevanten Daten ausgewertet werden.

Insbesondere ist vorgesehen, dass die Auswertevorrichtung 31 eine Zustandsänderung des Prüfguts 27 erkennt, wobei diese Erkennung mittels der Bildverarbeitungseinrichtung 34 erfolgt. Die Erkennung einer Zustandsänderung kann durch einen einfachen Vergleich von Bilddatensätzen durchgeführt werden. Kommt es zu einer mechanischen Beschädigung des Prüfguts 27 durch die Bewegung des Rütteltisches 28 bei einer bestimmten Temperatur innerhalb des Prüfraums 26 wird aufgrund der mechanischen Beschädigung das Prüfgut 27 mit der Wärmebildkamera 33 eine optisch erfassbare Veränderung an dem Prüfgut 27 detektiert. Beispielsweise ein hier nicht dargestellter Riss im Prüfgut 27 kann dann als Zustandsänderung erkannt werden. Die Auswertevorrichtung 31 klassifiziert die Zustandsänderung und übermittelt ein Signal an die Steuervorrichtung 30, wobei die Steuervorrichtung 30 den Prüfzeitabschnitt bzw. den Prüfablauf beendet. So ist es möglich, den Prüfablauf vorzeitig zu beenden. Alternativ kann die Auswertevorrichtung 31 an die Speichereinrichtung 35 ein direkt am Prüfgut 27 gemessenen Temperaturwert, wie zur **Fig. 1** beschrieben, übermitteln, wobei die Steuervorrichtung 30 eine Temperatur im Prüfraum 26 noch genauer regeln kann.

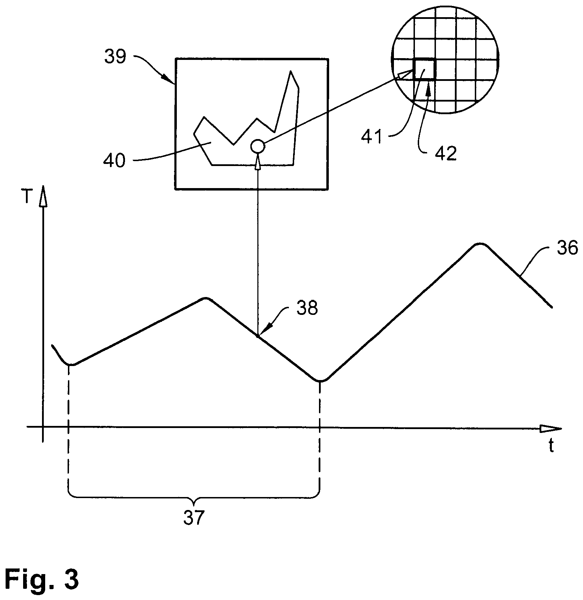

Die **Fig. 3** zeigt eine schematische Darstellung eines Prüfablaufs anhand eines Zeit-Temperaturdiagramms. Mit einer Linie 36 ist hier eine Funktion einer Temperatur über die Zeit beispielhaft dargestellt. Innerhalb eines Prüfzeitabschnittes 37 wird zu einem Zeitwert 38 mit einer hier nicht dargestellten Wärmebildkamera eine thermografische Aufnahme 39 von Prüfgut 40 bzw. ein Bilddatensatz erfasst. Ein Pixel 41 der thermografischen Aufnahme 39 entspricht dabei einem Oberflächenpunkt 42 des Prüfguts 40. Die thermografische Aufnahme 39 ist hier zur näheren Veranschaulichung abschnittsweise vergrößert dargestellt. Mittels der hier nicht dargestellten Auswertevorrichtung kann einer Abfolge von Bilddatensätzen bzw. thermografischen Aufnahmen 39 und deren Pixeln 41 je Pixel 41 einen Temperaturwert zugeordnet werden. Für jede thermografische Aufnahme 39 ergibt sich daher für jedes Pixel 41 eine Linie 39. Damit wird es möglich zu jedem Zeitpunkt des Prüfzeitabschnittes 37 für jedes Pixel 41 einen Temperaturwert zu bestimmen.

## Patentansprüche

1. Verfahren zur Steuerung einer Prüfkammer (25), insbesondere einer Klimakammer, wobei in einem Prüfraum (10, 26) der Prüfkammer Prüfgut (17, 27, 40) angeordnet und in einem Prüfzeitabschnitt (37) im Prüfraum zumindest einer physikalischen Prüfbedingung ausgesetzt wird, wobei eine Einstellung der Prüfbedingung mittels einer Steuervorrichtung (30) gesteuert wird, wobei in dem Prüfzeitabschnitt mittels zumindest einer Kamera Bilddatensätze des Prüfguts erfasst werden, wobei die Bilddatensätze mittels einer Auswertevorrichtung (31) verarbeitet werden, wobei mittels der Auswertevorrichtung eine Veränderung der Bilddatensätze in dem Prüfzeitabschnitt bestimmt wird,
**dadurch gekennzeichnet,**
**dass** bei einer Veränderung der Bilddatensätze die Auswertevorrichtung der Steuervorrichtung eine Zustandsänderung des Prüfguts signalisiert, wobei die Steuervorrichtung in dem Prüfzeitabschnitt die Prüfbedingung in Abhängigkeit der Zustandsänderung anpasst.

2. Verfahren nach Anspruch 1,
dadurch **genkennzeichnet**,
dass die physikalische Prüfbedingung eine Temperatur, eine relative Luftfeuchte, eine Korrosionsatmosphäre und/oder eine Bauteilfestigkeit sind.

3. Verfahren nach Anspruch 1 oder 2,
**dadurch gekennzeichnet,**
**dass** eine mit der Kamera optisch erfassbare Veränderung an dem Prüfgut (17, 27, 40) in dem Prüfzeitabschnitt (37) mittels der Auswertevorrichtung (31) als Zustandsänderung bestimmt wird.

4. Verfahren nach einem der vorangehenden Ansprüche,
**dadurch gekennzeichnet,**
**dass** an dem Prüfgut (17, 27, 40) Referenzpunkte definiert werden, wobei eine örtliche Veränderung der Referenzpunkte in dem Prüfzeitabschnitt (37) mittels der Auswertevorrichtung (31) bestimmt wird.

5. Verfahren nach einem der vorangehenden Ansprüche,
**dadurch gekennzeichnet,**
**dass** an dem Prüfgut (17, 27, 40) eine Rissbildung und/oder eine plötzliche Veränderung des Prüfguts in dem Prüfzeitabschnitt (37) mittels der Auswertevorrichtung (31) bestimmt werden.

6. Verfahren nach einem der vorangehenden Ansprüche,
**dadurch gekennzeichnet,**
**dass** an dem Prüfgut (17, 27, 40) eine physikalische Veränderung eines Stoffs durch Sublimation, Resublimation, Kondensation, Verdampfung, Erstarren, oder Schmelzen in dem Prüfzeitabschnitt (37) mittels der Auswertevorrichtung (31) bestimmt wird.

7. Verfahren nach einem der vorangehenden Ansprüche,
**dadurch gekennzeichnet,**
**dass** an dem Prüfgut (17, 27, 40) eine Korrosion einer Oberfläche des Prüfguts in dem Prüfzeitabschnitt (37) mittels der Auswertevorrichtung (31) bestimmt wird.

8. Verfahren nach einem der vorangehenden Ansprüche,
**dadurch gekennzeichnet,**
**dass** ein Funktionstest des Prüfguts (17, 27, 40) in dem Prüfzeitabschnitt (37) durchgeführt wird.

9. Verfahren nach einem der vorangehenden Ansprüche,
**dadurch gekennzeichnet,**
**dass** mittels der Auswertevorrichtung (31) die Bilddatensätze mit Zeitwerten (38) des Prüfzeitabschnitts (37) und/oder Messwerten zumindest eines Sensors (24, 32) im Prüfraum (10, 26) korreliert werden, wobei die Bilddatensätze in einer Speichereinrichtung (35) gespeichert werden.

10. Verfahren nach einem der vorangehenden Ansprüche,
**dadurch gekennzeichnet,**
**dass** die Kamera eine Wärmebildkamera (20, 33) ist, wobei das Prüfgut (17, 27, 40) mittels der Wärmebildkamera thermografisch aufgenommen wird.

11. Verfahren nach Anspruch 10,
dadurch **gekennzeichneit**,
dass in dem Prüfzeitabschnitt (37) mittels der Wärmebildkamera (20, 33) aus Pixeln (41) gebildete thermografische Aufnahmen (39) des Prüfguts (17, 27, 40), die durch die Bilddatensätze repräsentiert werden, erfasst werden, wobei den Bilddatensätzen jeweils Zeitwerte (38) innerhalb des Prüfzeitabschnitts zugeordnet werden, wobei je Zeitwert zumindest einem Pixel (41) eines Bilddatensatzes ein Temperaturwert innerhalb des Prüfzeitabschnitts zugeordnet wird, derart, dass mittels der Wärmebildkamera eine Temperaturmessung eines von dem Pixel repräsentierten Oberflächenpunktes (42) des Prüfguts erfolgt.

12. Verfahren nach einem der vorangehenden Ansprüche,
**dadurch gekennzeichnet,**
**dass** die Kamera innerhalb des Prüfraums (10, 26) in einem Schutzgehäuse (23) oder außerhalb des Prüfraums verwendet wird.

13. Verfahren nach einem der vorangehenden Ansprüche,
**dadurch gekennzeichnet,**
**dass** die Auswertevorrichtung (31) Bilddatensätze mehrerer Kameras gleichzeitig verarbeitet.

14. Verfahren nach einem der vorangehenden Ansprüche,
**dadurch gekennzeichnet,**
**dass** nach Erreichen einer definierten Zustandsänderung von der Steuervorrichtung (30) der Prüfzeitabschnitt (37) beendet wird.

15. Verfahren nach einem der vorangehenden Ansprüche,
**dadurch gekennzeichnet,**
**dass** die Steuervorrichtung (30) nach dem Prüfzeitabschnitt (37) einen Prüfablauf abbricht, den Prüfablauf mit einem weiteren Prüfzeitabschnitt fortsetzt oder ein Signal erzeugt.

16. Verfahren nach einem der vorangehenden Ansprüche,
**dadurch gekennzeichnet,**
**dass** die Steuervorrichtung (30) der Auswertevorrichtung (31) eine Änderung der Prüfbedingung, vorzugsweise eine mit einem Sensor (24, 32) messbare physikalische Zustandsänderung des Prüfguts (17, 27, 40), des Prüfraums (10, 26) und/oder eine Änderung des Prüfablaufs signalisiert, wobei die Auswertevorrichtung die Verarbeitung der Bilddatensätze und/oder die Signalisierung der Zustandsänderung an die Steuervorrichtung ändert.

17. Verwendung einer Kamera zur Durchführung eines Verfahrens zur Steuerung einer Prüfkammer, insbesondere einer Klimakammer, nach einem der vorangehenden Ansprüche.

## Claims

1. A method for controlling a test chamber (25), in particular a climate chamber, test material (17, 27, 40) being disposed in a test space (10, 26) of the test chamber and being exposed to at least one physical test condition within the test space during a test period (37), a setting of the test condition being controlled using a control device (30), at least one camera acquiring image datasets of the test material during the test period, the image datasets being processed using an evaluating device (31), the evaluating device determining a change in the image datasets during the test period,
**characterized in that**
in case of a change in the image datasets, the evaluating device signals a change in state of the test material to the control device, the control device adjusting the test condition during the test period as a function of the change in state.

2. The method according to claim 1,
**characterized in that**
the physical test condition is a temperature, relative humidity, a corrosion atmosphere and/or component strength.

3. The method according to claim 1 or 2,
**characterized in that**
a change in the test material (17, 27, 40) that is optically detectable using the camera during the test period (37) is determined as a change in state by means of the evaluating device (31).

4. The method according to any one of the preceding claims,
**characterized in that**
reference points are defined on the test material (17, 27, 40), the evaluating device (31) determining a local change in the reference points during the test period (37).

5. The method according to any one of the preceding claims,
**characterized in that**
the evaluating device (31) determines a formation of cracks on the test material (27, 27, 40) and/or a sudden change in the test material during the test period (37).

6. The method according to any one of the preceding claims,
**characterized in that**
the evaluating device (31) determines a physical change in a substance by sublimation, desublimation, condensation, evaporation, solidification or melting during the test period (37) on the test material (17, 27, 40).

7. The method according to any one of the preceding claims,
**characterized in that**
the evaluating device (31) determines corrosion of a surface of the test material during the test period (37) on the test material (17, 27, 40).

8. The method according to any one of the preceding claims,
**characterized in that**
a function test of the test material (17, 27, 40) is performed during the test period (37).

9. The method according to any one of the preceding claims,
**characterized in that**
the evaluating device (31) correlates the image datasets with time values (38) of the test period (37) and/or with measured values of at least one sensor (24, 43) in the test space (10, 26), the image datasets being stored in a memory (35).

10. The method according to any one of the preceding claims,
**characterized in that**
the camera is an infrared camera (20, 33), the test material (17, 27, 40) being thermographically recorded using the infrared camera.

11. The method according to claim 10,
**characterized in that**
thermographic recordings (39) of the test material (17, 27, 40) composed of pixels (41) and represented by the image datasets are acquired during the test period (37) using the infrared camera (20, 33), the image datasets each being assigned time values (38) within the test period, at least one pixel (41) of an image dataset being assigned a temperature value within the test period per time value in such a manner that a temperature of a surface point (42) of the test material that is represented by the pixel is measured using the infrared camera.

12. The method according to any one of the preceding claims,
**characterized in that**
the camera is used in a protective housing (23) within the test space (10, 26) or is used outside the test space.

13. The method according to any one of the preceding claims,
**characterized in that**
the evaluating device (31) processes image datasets of multiple cameras simultaneously.

14. The method according to any one of the preceding claims,
**characterized in that**
the control device (30) terminates the test period (37) once a defined change in state is reached.

15. The method according to any one of the preceding claims,
**characterized in that**
after the test period (38), the control device (30) interrupts a test sequence, continues the test sequence with another test period or generates a signal.

16. The method according to any one of the preceding claims,
**characterized in that**
the control device (30) signals to the evaluating device (31) a change in the test condition, preferably a physical change measurable by a sensor in the state of the test material (17, 27, 40) and/or in the state of the test space (10, 26) and/or a change in the test sequence, the evaluating device changing the processing of the image datasets and/or the signaling of the change in state to the control device.

17. A use of a camera for implementing a method for controlling a test chamber, in particular a climate chamber, according to any one of the preceding claims.

## Revendications

1. Procédé de commande d'une chambre d'essai (25), notamment d'une chambre climatique, du matériau d'essai (17, 27, 40) étant disposé dans un espace d'essai (10, 26) de la chambre d'essai et étant exposé à au moins une condition d'essai physique dans l'espace d'essai pendant une période d'essai (37), un paramètre de la condition d'essai étant commandé en utilisant un dispositif de commande (30), au moins une caméra saisissant des jeux de données d'image du matériau d'essai pendant la période d'essai, les jeux de données d'image étant traités en utilisant un dispositif d'évaluation (31), le dispositif d'évaluation déterminant un changement dans les jeux de données d'image pendant la période d'essai,
**caractérisé en ce**
**qu'**en cas d'un changement dans les jeux de données d'image, le dispositif d'évaluation signale un changement d'état du matériau d'essai au dispositif de commande, le dispositif de commande ajustant la condition d'essai pendant la période d'essai en fonction du changement d'état.

2. Procédé selon la revendication 1,
**caractérisé en ce que**
la condition d'essai physique est une température, une humidité relative, une atmosphère de corrosion et/ou une solidité du composant.

3. Procédé selon la revendication 1 ou 2,
**caractérisé en ce**
**qu'**un changement dans le matériau d'essai (17, 27, 40) pendant la période d'essai (37) qui est détectable de manière optique en utilisant la caméra est déterminé comme changement d'état en utilisant le dispositif d'évaluation (31).

4. Procédé selon l'une quelconque des revendications précédentes,
**caractérisé en ce que**
des points de référence sont définis sur le matériau d'essai (17, 27, 40), le dispositif d'évaluation (31) déterminant un changement local dans les points de référence pendant la période d'essai (37).

5. Procédé selon l'une quelconque des revendications précédentes,
**caractérisé en ce que**
le dispositif d'évaluation (31) détermine une formation de criques sur le matériau d'essai (27, 27, 40) et/ou un changement soudain dans le matériau d'essai pendant la période d'essai (37).

6. Procédé selon l'une quelconque des revendications précédentes,
**caractérisé en ce que**
le dispositif d'évaluation (31) détermine un changement physique dans une substance par sublimation, sublimation inverse, condensation, évaporation, solidification ou fusion pendant la période d'essai (37) sur le matériau d'essai (17, 27, 40).

7. Procédé selon l'une quelconque des revendications précédentes,
**caractérisé en ce que**
le dispositif d'évaluation (31) détermine une corrosion d'une surface du matériau d'essai pendant la période d'essai (37) sur le matériau d'essai (17, 27, 40).

8. Procédé selon l'une quelconque des revendications précédentes,
**caractérisé en ce**
**qu'**un essai de fonctionnement du matériau d'essai (17, 27, 40) est effectué pendant la période d'essai (37).

9. Procédé selon l'une quelconque des revendications précédentes,
**caractérisé en ce que**
les jeux de données d'image sont mis en corrélation avec des valeurs de temps (38) de la période d'essai (37) et/ou avec des valeurs de mesure d'au moins un capteur (24, 43) dans l'espace d'essai (10, 26) en utilisant le dispositif d'évaluation (31), les jeux de données d'image étant enregistrés dans une mémoire (35).

10. Procédé selon l'une quelconque des revendications précédentes,
**caractérisé en ce que**
la caméra est une caméra thermique (20, 33), le matériau d'essai (17, 27, 40) étant capturé de manière thermographique en utilisant la caméra thermique.

11. Procédé selon la revendication 10,
**caractérisé en ce que**
des enregistrements thermographiques (39) du matériau d'essai (17, 27, 40) se composant de pixels (41) et représentés par les jeux de données d'image sont enregistrés pendant la période d'essai (37) en utilisant la caméra thermique (20, 33), des valeurs de temps (38) dans la période d'essai étant associées à chacun des jeux de données d'image, une valeur de température dans la période d'essai étant associée à au moins un pixel (41) d'un jeu de données d'image par valeur de temps de telle manière qu'une température d'un point de surface (42) du matériau d'essai représenté par le pixel est mesuré en utilisant la caméra thermique.

12. Procédé selon l'une quelconque des revendications précédentes,
**caractérisé en ce que**
la caméra est utilisée dans un boîtier de protection (23) dans l'espace d'essai (10, 26) ou elle est utilisée hors de l'espace d'essai.

13. Procédé selon l'une quelconque des revendications précédentes,
**caractérisé en ce que**
le dispositif d'évaluation (31) traite des jeux de données d'image de plusieurs caméras en même temps.

14. Procédé selon l'une quelconque des revendications précédentes,
**caractérisé en ce que**
le dispositif de commande (30) termine la période d'essai (37) lorsqu'un changement d'état défini est atteint.

15. Procédé selon l'une quelconque des revendications précédentes,
**caractérisé en ce**
**qu'**après la période d'essai (38), le dispositif de commande (30) interrompt une séquence d'essai, continue la séquence d'essai avec une autre période d'essai ou génère un signal.

16. Procédé selon l'une quelconque des revendications précédentes,
**caractérisé en ce que**
le dispositif de commande (30) signale au dispositif d'évaluation (31) un changement dans la condition d'essai, de préférence un changement mesurable par un capteur dans l'état physique du matériau d'essai (17, 27, 40) et/ou dans l'état de l'espace d'essai (10, 26) et/ou un changement dans la séquence d'essai, le dispositif d'évaluation changeant le traitement des jeux de données d'image et/ou la signalisation du changement d'état au dispositif de commande.

17. Utilisation d'une caméra pour l'exécution d'un procédé de commande d'une chambre d'essai, notamment d'une chambre climatique, selon l'une quelconque des revendications précédentes.
